(19) Europäisches Patentamt
European Patent Office
Office européen des brevets

(11) Veröffentlichungsnummer: **0 034 300**
**B1**

(12) # EUROPÄISCHE PATENTSCHRIFT

(45) Veröffentlichungstag der Patentschrift: **16.05.84**

(51) Int. Cl.³: **H 01 B 1/20**, H 01 B 5/16, C 08 K 5/00, C 08 K 7/02

(21) Anmeldenummer: **81100773.1**

(22) Anmeldetag: **04.02.81**

(54) **Elektrisch leitende und antistatische Formmassen.**

(30) Priorität: **16.02.80 DE 3005849**

(43) Veröffentlichungstag der Anmeldung: **26.08.81 Patentblatt 81/34**

(45) Bekanntmachung des Hinweises auf die Patenterteilung: **16.05.84 Patentblatt 84/20**

(84) Benannte Vertragsstaaten: **DE FR GB IT**

(56) Entgegenhaltungen: **Keine**

(73) Patentinhaber: **BAYER AG, Konzernverwaltung RP Patentabteilung, D-5090 Leverkusen 1 Bayerwerk (DE)**

(72) Erfinder: **Hocker, Jürgen, Dr., Eichenweg 6, D-5060 Bergisch-Gladbach 2 (DE)**
Erfinder: **Dhein, Rolf, Dr., Deswatinesstrasse 30, D-4150 Krefeld 1 (DE)**
Erfinder: **Merten, Rudolf, Dr., Berta-von-Suttner-Strasse 55, D-5090 Leverkusen 1 (DE)**

EP 0 034 300 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Elektrisch leitende und antistatische Formmassen

Gegenstand der Erfindung sind thermoplastische Formmassen, die einen thermoplastischen Kunststoff und 0,1 bis 30 Gew.-% eines darin weitgehend unlöslichen Charge-Transfer-Komplexes in Form faser- oder nadelförmiger Kristalle mit einem Verhältnis von Durchmesser zu Länge von größer als 1 zu 20 enthalten.

In diesen Formmassen bleiben die charakteristischen Eigenschaften der thermoplastischen Kunststoffe weitgehend erhalten, die Massen besitzen aber stark erhöhte elektrische Leitfähigkeit, und als Folge davon laden sie sich nicht elektrisch auf, sie sind antistatisch.

Synthetische thermoplastische Polymere sind im allgemeinen elektrische Isolatoren mit spezifischen Leitfähigkeiten kleiner als $10^{-12}\ \Omega^{-1}\ cm^{-1}$. Sie neigen stark zu elektrostatischen Aufladungen, die unangenehm und zum Teil sogar gefährlich sein können.

Um thermoplastische Kunststoffe antistatisch auszurüsten, ist eine große Zahl von Antistatikzusätzen entwickelt worden. Wenn diese Zusätze auf die Oberfläche von Kunststoffteilen aufgebracht werden, verlieren sie meist nach kurzer Zeit ihre Wirksamkeit. Man hat auch Antistatikzusätze in die Kunststoffe eingearbeitet. Häufig verschlechtern sich dann die Eigenschaften oder die Zusätze wandern aus. Meist verleihen diese Zusätze der Oberfläche des Kunststoffs eine gewisse Hydrophilie, so daß sich ein Wasserfilm ausbilden kann, der die Aufladung verhindert.

Um Thermoplasten elektrisch leitfähig zu machen, hat man versucht, anorganische elektrisch leitende Substanzen, z. B. Metalle, Metalloxide, Metallsulfide, Ruß oder Graphit einzuarbeiten. Diese Zusätze vertragen sich aber mit den organischen Polymeren sehr schlecht. Die erforderliche Menge, meist 10 bis 30 Gew.-%, bezogen auf den Kunststoff, ist so groß, daß die mechanischen Eigenschaften entscheidend verschlechtert werden.

Letztlich hat man auch Polymeren, wie beispielsweise Polyacrylnitril, lösliche Charge-Transfer-Komplexe zugesetzt (vergl. DE-AS 15 44 976, FR-PS 14 45 213, M. Kryszewski et al., Organic Coatings and Plastics Chemistry, Vol. 38, Seite 523 (1978), sowie K. Mizoguchi et al., Nippon Kagaku Kaishi 1977, Seiten 1029—1034). Da die Löslichkeit von Charge-Transfer-Komplexen in Polymeren meist nur gering ist, führt diese Methode im allgemeinen nicht zum Erfolg.

Der Erfindung liegt nun die Erkenntnis zugrunde, daß man in sehr vorteilhafter Weise die Leitfähigkeit organischer Polymerer verbessern kann, wenn man ihnen unlösliche Tetracyanochinodimethan-Charge-Transfer-Komplexe in Form nadelförmiger oder faserförmiger Kristalle zusetzt, wobei das Verhältnis vom Durchmesser zu Länge der Nadeln bzw. Fasern 1 zu 20 bis 1 zu 500, bevorzugt 1 zu 50 bis 1 zu 200 ist. Da sich die Fasern bzw. Nadeln in den Kunststoffen gleichmäßig verteilen, bilden sich in der Polymermasse Leitfähigkeitsbahnen aus, die dem gesamten Kunststoff bzw. daraus hergestellten Formteilen stark erhöhte Leitfähigkeit verleihen.

Solche Charge-TransferKomplexe sind an sich bekannt. Bevorzugt werden im Rahmen der Erfindung solche ChargeTransfer-Komplexe, deren Donorteil sich von einer organischen Stickstoff und/ oder Sauerstoff und/oder Schwefel enthaltenden Verbindung ableitet — dieser Donorteil liegt im allgemeinen als Kation vor. Beispiele hierfür sind die Kationen der folgenden Verbindungen:

Triethylamin, Diethylcyclohexylamin, Chinolin, Benzo-2,3-chinolin, o-Phenanthrolin, Benzthiazol, N-Methylbenzimidazol, Pyridin, 2,2'-Dipyridin, 4,4'-Dipyridin, 4,5-Dimethylthiazolin, l-Phenylimidazolidin, Bis-[1,3-diphenyl-imidazolidinyliden-(2)], Bis-[3-methyl-benzthiazolinyliden-(2)], Tetrathiafulvalen.

Elektronenakzeptorkomponente ist Tetracyanochinodimethan. Außer dem Donorkation und den Akzeptoranionen können die Charge-Transfer-Komplexe noch neutrale Tetracyanochinodimethanmoleküle enthalten. Im allgemeinen sind bis zu vier solcher Moleküle vorhanden.

Thermoplastische Polymerisate, die erfindungsgemäß antistatisch bzw. elektrisch leitend ausgerüstet werden können, sind Polyolefine wie Polyethylen und Polypropylen; Polyvinylchlorid; Polyacrylate und Polymethacrylate; Polycarbonate; Polyamide und nichtelastomere Polydiene wie Transpolybutadien.

Die schwer löslichen Charge-Transfer-Komplexe können den thermoplastischen Kunststoffen in Mengen von 0,1 bis 30, bevorzugt 0,3 bis 10 Gew.-% zugesetzt werden. Es ist möglich, den Charge-Transfer-Komplex bereits bei der Herstellung des Polymeren zuzufügen oder auch ihn nachträglich mit den für den Thermoplasten üblichen Mischmethoden einzuarbeiten.

Die nadelförmigen bzw. faserförmigen Kristalle der Charge-Transfer-Komplexe haben vorzugsweise Durchmesser von 1 bis 10 µm und eine Länge von 50 bis 200 µm. Beim Einarbeiten dieser Kristalle muß natürlich darauf geachtet werden, daß ihre Struktur möglichst wenig verändert wird.

Deshalb ist es besonders vorteilhaft, die Charge-Transfer-Komplexe in einer Lösung des Polymeren zu erzeugen, indem man dieser Polymerlösung zuerst die Donorkomponente als Jodid in einem geeigneten Lösungsmittel zugibt und dann den Akzeptor, ebenfalls in einem geeigneten Lösungsmittel zufügt. Die Charge-Tansfer-Komplexe fallen dann direkt in einer besonders geeigneten Kristallform aus.

Beispiel 1

Zu einer 20prozentigen Lösung eines Polycarbonats von der Molmasse 28 000 in Methylenchlorid fügt man 0,5%, bezogen auf das eingesetzte Polycarbonat, eines faserförmigen Charge-Transfer-Komplexes der Formel II

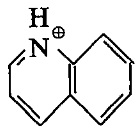 · TCNQ$^{\ominus}$ · TCNQ (TCNQ: Tetracyanochinodimethan) (II)

Nach Vergießen der Lösung zu einem Film erhält man eine gelbliche, den Charge-Transfer-Komplex II in Form von Fasern enthaltende Folie einer spezifischen Leitfähigkeit von $3 \cdot 10^{-6}\ \Omega^{-1}cm^{-1}$.

Beispiel 2

Eine Polyvinylchloridfolie, Dicke 5 µm, die 1,0% der faserförmigen Verbindung II enthält, zeigt eine spezifische Leitfähigkeit von $3 \cdot 10^{-8}\ \Omega^{-1}\ cm^{-1}$.

Beispiel 3

Zu einer 20 gew.-%igen Lösung eines Polycarbonats der Molmasse 28 000 in Methylenchlorid fügt man nacheinander eine Lösung von Phenanthroliniumjodid und eine Lösung von TCNQ im Molverhältnis 2 : 3, so daß die Summe dieser Substanzen 0,5 Gewichtsprozente des eingesetzten Polycarbonats beträgt. Nach Vergießen des Filmes mit einer Rakel erhält man eine 6 µm dicke Folie, in der die faserförmigen Kristalle III bevorzugt in einer Richtung liegen. Die Durchgangsleitfähigkeit beträgt $3 \cdot 10^{-5}\ \Omega^{-1}\ cm^{-1}$.

2 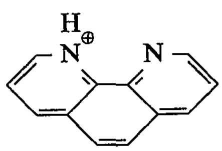 · 2TCNQ$^{\ominus}$ · TCNQ (III)

Beispiel 4

Eine Schmelze von Polyamid 66 wird unter Stickstoff mit 1 Gew.-% des Charge-Transfer-Komplexes IV versetzt und nach Durchmischen schnell auf Raumtemperatur abgekühlt.

2 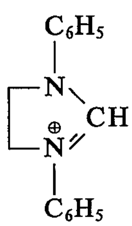 ·2TCNQ$^{\ominus}$ · TCNQ (IV)

Eine 0,5 cm dicke Platte zeigt eine spezifische Leitfähigkeit von $3 \cdot 10^{-6}\ \Omega^{-1}\ cm^{-1}$.

**Patentansprüche**

1. Tetracyanochinodimethan-Charge-Transfer-Komplexe enthaltende elektrisch leitfähige oder antistatische Polymere auf Basis von Polyolefinen, Polyvinylchlorid, Polyacrylaten, Polymethacrylat, Polycarbonaten, Polyamiden und nichtelastomeren Polydienen, dadurch gekennzeichnet, daß die Tetracyanochinodimethan-Charge-Transfer-Komplexe in Form faser- bzw. nadelförmiger Kristalle mit einem Verhältnis von Kristalldurchmesser zu Kristallänge zwischen 1 : 20 und 1 : 500, vorzugsweise zwischen 1 : 20 und 1 : 200, im Polymeren enthalten sind.

2. Verfahren zur Herstellung elektrisch leitfähiger Polymerer nach Anspruch 1, dadurch gekennzeichnet, daß man zu einem Monomeren, einer löslichen Polymervorstufe oder einer Polymerlösung nacheinander eine Lösung des Donors bzw. eines Donorsalzes in einem geeigneten Lösungsmittel und anschließend eine Lösung von Tetracyanochinodimethan bzw. eines Salzes davon in dieser oder in

umgekehrter Reihenfolge zufügt und so einen festen Charge-Transfer-Komplex im Polymeren bzw. seiner Vorstufe erzeugt.

## Claims

1. Electrically conductive or antistatic polymers based on polyolefins, polyvinyl chloride, polyacrylates, polymethacrylate, polycarbonates, polyamides and non-elastomeric polydienes, and containing tetracyanoquinodimethane charge transfer complexes, characterised in that the tetracyanoquinodimethane charge transfer complexes are contained in the polymer in the form of fibre- or needlelike crystals having a ratio of crystal diameter to crystal length of between 1 : 20 and 1 : 500, preferably of between 1 : 20 and 1 : 200.

2. Process for the production of electrically conductive polymers according to claim 1, characterized in that a solution of the donor or of a donor salt in a suitable solvent and then a solution of tetracyanoquinodimethane or of a salt thereof are successively added in this order or in the reverse order to a monomer, a soluble prepolymer or a polymer solution and a solid charge transfer complex is thus produced in the polymer or its prepolymer.

## Revendication

1. Polymères conduisant l'électricité ou antistatiques à base de polyoléfines, de chlorure de polyvinyle, de polyacrylates, de polyméthacrylate, de polycarbonates, de polyamides et de polydiènes non élastomères, contenant des complexes de tétracyanoquinodiméthane de transfert de charge, caractérisés en ce que les complexes de tétracyanoquinodiméthane de transfert de charge sont présents dans le polymère sous la forme de cristaux en fibres ou en aiquilles dont le rapport du diamètre à la longueur se situe entre 1 : 20 et 1 : 500 et de préférence entre 1 : 20 et 1 : 200.

2. Procédé de prduction de po lymères conduisant l'électricité suivant la revendication 1, caractérisé en ce qu'on ajoute successivement à un monomère, à un stade préalable de polymère soluble ou à une solution de polymère, une solution du donneur ou d'un sol donneur dans un solvant approprié, puis une solution de tétracyanoquinodiméthane ou d'un sel de ce complsé, dans l'ordre indiqué ou dans l'ordre inverse et on produit ainsi un complexe solide de transfert de charge dans le polymère ou dans son stade préalable.